(19) Europäisches Patentamt European Patent Office Office européen des brevets

(11) **EP 4 672 084 A1**

(12) **EUROPEAN PATENT APPLICATION**

(43) Date of publication:
**31.12.2025 Bulletin 2026/01**

(21) Application number: **24275077.6**

(22) Date of filing: **27.06.2024**

(51) International Patent Classification (IPC):
**G06N 3/006** (2023.01)    **G06N 3/042** (2023.01)
**G06N 3/045** (2023.01)    **G06N 3/084** (2023.01)
**G06N 5/01** (2023.01)    **G06N 3/0985** (2023.01)

(52) Cooperative Patent Classification (CPC):
**G06N 3/006; G06N 3/042; G06N 3/045;**
**G06N 3/0985; G06N 5/01;** G06N 3/048;
G06N 3/084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Victory Point**
**Frimley**
**Camberley, Surrey GU16 7EX (GB)**

(54) **TRAINING A PURSUER NEURAL NETWORK AGENT**

(57) The present invention relates to a computer-implemented method of training a pursuer neural network agent. The method comprising: providing an evader neural network agent trained to update iteratively a plurality of dynamic parameters of an evader, a pursuer neural network agent initialised to update iteratively a plurality of approximators for a pursuer, and an ordinary differential equation solver configured to update a plurality of dynamic parameters of the pursuer based on the updated approximators; sampling initial dynamic parameters from a set of initial dynamic parameters of the evader; running a simulation involving the pursuer neural network agent pursuing the evader neural network agent based on the sampled initial dynamic parameters; computing a loss based on the dynamic parameters of the pursuer from the ordinary differential equation solver and the dynamic parameters of the evader from the evader neural network agent; and optimising weights of the pursuer neural network agent based on the computed loss.

Figure 4

**Description**

**FIELD**

The subject-matter of the present disclosure relates to computer-implemented methods of training a pursuer neural network agent, transitory or non-transitory computer-readable media, and pursuer vehicles.

**BACKGROUND**

The need for advanced security measures to protect critical infrastructure and maritime assets has revealed the inadequacies of traditional defense approaches in the marine environment. Integrating artificial intelligence (AI) and autonomous systems into Unmanned Surface Vehicle (USV) operations is essential to enhance the effectiveness and adaptability of maritime security strategies. These technologies significantly improve the strategic capabilities of USVs. AI-aided tactics for infrastructure protection using USVs are a critical application of these technologies, effectively modeled as a pursuit-evasion game where the USV is the pursuer and an intruder vessel is the evader. Although pursuit-evasion strategies are still in their early stages of application for USVs, they have been extensively explored in other domains. Research in this area typically divides methods into two categories: conventional control techniques and machine learning approaches.

The conventional approach involves applying classical control and optimization theory. One such methodology is the use of the Model Predictive Control (MPC) framework to design a controller. A study in utilized MPC for the USV pursuit and evasion game scenario and similar applications have been made in other robotic platforms. However, implementing the MPC methods in pursuit-evasion games necessitates numerous simplifications, resulting in diminished performance in real-world applications.

Another method in the first category applies game theory, where the problem is treated as a min-max optimization problem and addressed based on cost definitions. Pursuit-evasion, a subtopic of game theory, is extensively studied across various application areas. For maritime domain, some prior art methods analyze how game theory is applied to various USV tasks. Other prior art methods investigate the pursuit-evasion game problem for USVs based on the threat potential field (TPF). Similarly, game theory methodology has been investigated and applied for other platforms like robotics, unmanned aerial vehicles and unmanned underwater vehicles. Some other studies studied the pursuit-evasion of two aircraft in a horizontal planed and proposed a solution based on extremal trajectory maps. Another study solved the problem through modelling the aircraft control input limits, creating the Hamiltonian equation and solving the optimization problem numerically. Other studies looked into a multiplayer pursuit-evasion game consisting of prey, predator, and protector for collision avoidance problem. Other studies handled the pursuit-evasion problem for two satellites considering their continuous thrust reachable domains. Other multiplayer differential game theory application looked at enabling multiple UAVs to engage in multiple targets. However, analytical solutions in game theory are feasible for simplified cases but challenging to implement in real-time. Deriving these solutions requires many assumptions based on extensive calculus, leading to reduced effectiveness in real-world applications, similar to classical methods

In pursuit-evasion problems, our study's second category explores machine learning methodologies. Recent advancements in computational technology enable the training and deployment of machine learning models for real-world applications. Many studies use machine learning, particularly Reinforcement Learning (RL), for pursuit-evasion problems. RL is a trial-and-error-based learning approach where a machine autonomously learns optimal behavior or policies within a specific environment by maximizing or minimizing cumulative rewards or costs. An application of RL on maritime applications is to design a path following controller as the USV dynamics are usually not highly accurate and expose to high level of uncertainties. For the pursuit evasion problem, there have been several applications for training a pursuer, training an evader, co-operative hunting. RL for pursuit evasion game is also widely studied for robotics and UAVs for single/multi agent use cases. One advantage of RL methods is their suitability for fast real-time inference. However, a major limitation of RL methods is their training efficiency, which heavily depends on the design of reward functions, requiring careful reward engineering. Additionally, in continuous systems, the rapid expansion of the state space exploration complicates the search for global optimum solutions, representing a significant challenge in RL-based approaches.

It is an aim of the present invention to address such problems and improve on the prior art.

**SUMMARY**

According to an aspect of the present disclosure, there is provided a computer-implemented method of training a pursuer neural network agent, the method comprising: providing an evader neural network agent trained to update iteratively a plurality of dynamic parameters of an evader, a pursuer neural network agent initialised to update iteratively a plurality of approximators for a pursuer, and an ordinary differential equation solver configured to update a plurality of dynamic parameters of the pursuer based on the updated approximators; sampling initial dynamic parameters from a set of initial dynamic parameters of the evader; running a simulation involving the pursuer neural network agent pursuing the evader neural network agent based on the sampled initial dynamic parameters; computing a loss based on the dynamic parameters of the pursuer from the ordinary differential equation solver and the dynamic parameters of the evader from the evader neural network agent; and optimising weights of the pursuer neural network agent based on the computed loss. Initial dynamic parameters may also be called initial conditions.

Incorporating the ordinary differential equation solver into the loop results in the weights of the pursuer neural network agent being more optimised to pursue an evader performing unseen manoeuvres.

In an embodiment, the computer-implemented method further comprises: separating the set of initial dynamic parameters of the pursuer into a plurality of mini batches, wherein sampling initial dynamic parameters from a set of initial dynamic parameters of the evader, running the simulation involving the pursuer neural network agent, and computing a loss based on the output from the pursuer neural network agent are performed for each mini batch of the plurality of mini batches of initial dynamic parameters of the pursuer.

In an embodiment, the computer-implemented method further comprises: computing a mean loss using the loss computed for each mini batch, wherein optimising the weights of the pursuer neural network agent based on the computed loss comprises optimising the weights of the pursuer neural network agent using the mean computed loss.

In an embodiment, running the simulation comprises: performing forward propagation of the evader neural network agent to update the plurality of dynamic parameters based on the sampled initial dynamic parameters; and performing forward propagation of the pursuer neural network agent to update the plurality of dynamic parameters based on initial dynamic parameters of the pursuer, the updated dynamic parameters from the evader neural network agent.

In an embodiment, the computer-implemented method further comprises: providing initial dynamic parameters of the pursuer; dividing the initial dynamic parameters of the pursuer into mini batches; running the simulation for each mini batch; and computing the loss for each mini batch.

In an embodiment, the computer-implemented method further comprises: computing an average loss using the computed loss for all mini batches, wherein optimising the weights comprises optimising the weights of the pursuer neural network agent to minimise the average loss.

In an embodiment, the dynamic parameters of each of the evader and the pursuer comprise at least one of: position, heading angle, and velocity.

In an embodiment, computing a loss based on the dynamic parameters of the pursuer from the ordinary differential equation solver and the dynamic parameters of the evader from the evader neural network agent, comprises: computing a plurality of component losses; and computing the loss as a weighted sum of the plurality of component losses.

In an embodiment, computing the loss as a weighted sum of the plurality of component losses uses a formula:

calculating a first component loss $\mathcal{L}_F$ of the plurality of component losses associated with an objective of the pursuer in following the evader using $\mathcal{L}_F = \left| DTR - \left| \vec{P}_P(t) - \vec{P}_E(t) \right| \right|$, where $DTR$ is a desired tracking range, $\vec{P}_P(t) = \begin{bmatrix} x_P(t) \\ y_P(t) \end{bmatrix}$ and $\vec{P}_E(t) = \begin{bmatrix} x_E(t) \\ y_E(t) \end{bmatrix}$, where $\vec{P}_P(t)$ is a position of the pursuer, $x_P(t)$ is a position of the pursuer along an x direction, $y_P(t)$ is position of the pursuer along a y direction, $\vec{P}_E(t)$ is a position of the evader, $x_E(t)$ is a position of the evader along the x direction, and $y_E(t)$ is a position of the evader along the y direction; calculating a second component loss $\mathcal{L}_{CE}$ of the plurality of component losses using $\mathcal{L}_{CE} = \frac{1}{N}\sum_0^N w_{REF}^2 = \frac{1}{N}\sum_0^N \left( \mathcal{NN}^{(2)}(\mathcal{X}(t), W_{NN}) \right)^2$, where $\mathcal{NN}^{(*)}(\mathcal{X}(t), W_{NN})$, "*" shows the $*_{th}$ output of the pursuer neural network agent during the simulation, and N is a number of iterations during the simulation; calculating a third component loss $\mathcal{L}_{SC}$ of the plurality of component losses using

$$\mathcal{L}_{SC} = \lambda_{SC1}\left( \left| \left| relu(\theta(t) - \theta_{upper}) \right| \right| + \left| \left| relu(-\theta(t) + \theta_{lower}) \right| \right| \right)$$
$$+ \lambda_{SC2}\left( \left( V_x^P(t_f) - V_x^E(t_f) \right)^2 + \left( V_y^P(t_f) - V_y^E(t_f) \right)^2 \right)$$

, where $relu(*)$ denotes the rectified linear unit (ReLU) function, $\theta$ is the pursuer's heading angle and $\theta_{upper}, \theta_{lower}$ are the upper and lower limits of the heading angle, $V_x^P, V_y^P$ and $V_x^E, V_y^E$ are the velocity components of the pursuer and evader along the x and y directions, respectively; calculating a fourth component loss $\mathcal{L}_{CA}$ of the plurality of component losses using

$$\mathcal{L}_{CA} = \sum_1^N \left| DCAR - \left| relu(\vec{P}_P(t) - \vec{P}_E(t)) \right| \right|$$ , where *DCAR* stands for "Desired Collision Avoidance Range",

calculating a fifth component loss $\mathcal{L}_{AA}$ of the plurality of component losses using

$$\mathcal{L}_{AA} = ||(relu(-\tilde{R}_x^{EBF}(t))|| + M() * ||(relu(DSD - |\tilde{R}_y^{EBF}(t)|))||$$ , where $\tilde{R}_x^{EBF}(t)$ and $\tilde{R}_y^{EBF}(t)$ are

*x* and y components of the relative position between the pursuer and the evader, expressed in the evader's body frame, EBF, *DS* stands for "Desired Separation Distance", and *M*() is a mask function which assigns a value of 0 when the pursuer is positioned behind the evader, and a value of 1 when the pursuer is ahead of the evader.

In an embodiment, computing the loss as a weighted sum of the plurality of component losses uses $\mathcal{L}_{total}$

$=\lambda_F \mathcal{L}_F + \lambda_{CE} \mathcal{L}_{CE} + \lambda_{SC} \mathcal{L}_{SC} + \lambda_{CA} \mathcal{L}_{CA} + \lambda_{AA} \mathcal{L}_{AA}$ , where $\lambda_F$ is first a weight associated with the first loss component

$\mathcal{L}_F$ , $\lambda_{CE}$ is a second weight associated with the second loss component $\mathcal{L}_{CE}$ , $\lambda_{SC}$ is a third weight associated with the

third loss component $\mathcal{L}_{SC}$ , $\lambda_{CA}$ is a fourth weight associated with the fourth loss component $\mathcal{L}_{CA}$ , and $\lambda_{AA}$ is a fifth weight associated with the fifth loss component LAA.

In an embodiment, the dynamic parameters include a heading angle, a position, and a velocity.

In an embodiment, the evader neural network agent is trained to output a constant velocity and a constant heading angle of the evader.

According to an aspect of the present disclosure, there is provided a transitory, or non-transitory, computer-readable medium having instructions stored thereon that, when executed by at least one processor, causes the at least one processor to perform the computer-implemented method of any preceding aspect or embodiment.

According to an aspect of the present disclosure, there is provided a pursuer vehicle comprising: at least one control surface for moving the pursuer vehicle; at least one sensor for sensing at least one dynamic parameter of an evader vehicle; at least one processor; and storage having the pursuer neural network agent trained according a method of any preceding aspect or embodiment stored thereon, the pursuer neural network agent causing the at least one processor to control the at least one control surface to move the pursuer vehicle in response to the at least one dynamic parameter of the evader vehicle.

## BRIEF DESCRIPTION OF DRAWINGS

The subject-matter of the present disclosure is best described with reference to the accompanying figures, in which:

Figure 1 shows a perspective view illustrating scenario relating to infrastructure invasion;

Figure 2 shows illustrations of example unmanned surface vehicles (USVs) with vehicle dynamic limit trends;

Figure 3 shows an ordinary different equation solver according to one or more embodiments;

Figure 4 shows a flowchart detailed policy development associated with scientific machine learning;

Figure 5 shows a plurality of graphs illustrating time-elapsed trajectories of pursuer and evader from a scenario, e.g. scenario 1;

Figure 6 shows a graph of relative distance between a pursuer and an evader over time for another scenario, e.g. scenario 1;

Figure 7 shows graphs of scientific machine learning policy control actions over time for scenario 1;

Figure 8 shows a plurality of graphs illustrating a time evolution of the policy's commanded reference control actions and the realised actions in scenario 2;

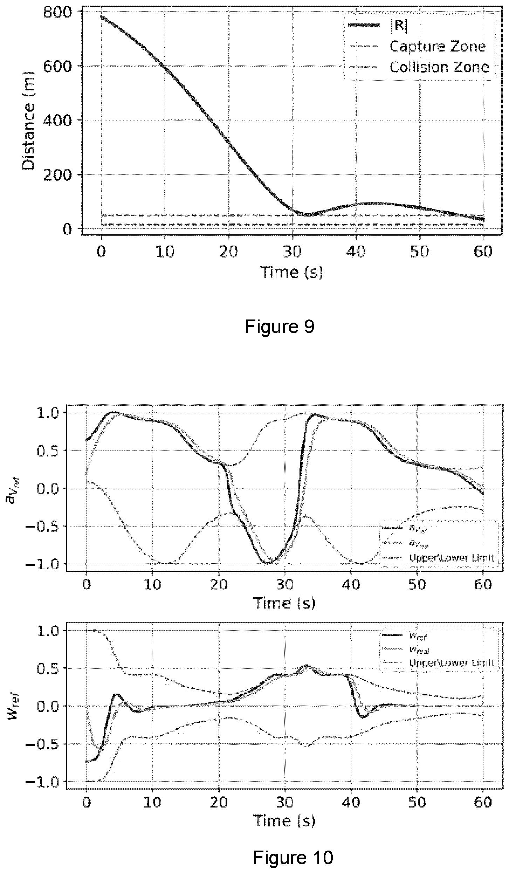

Figure 9 shows a graph illustrating relative distance between the pursuer and the evader over time for scenario 2;

Figure 10 shows a plurality of graphs illustrating a time evolution of the scientific machine learning policy control actions over time for scenario 2;

Figure 11 shows a plurality of graphs illustrating time-elapsed trajectories of pursuer and evader from scenario 2.

**DESCRIPTION OF EMBODIMENTS**

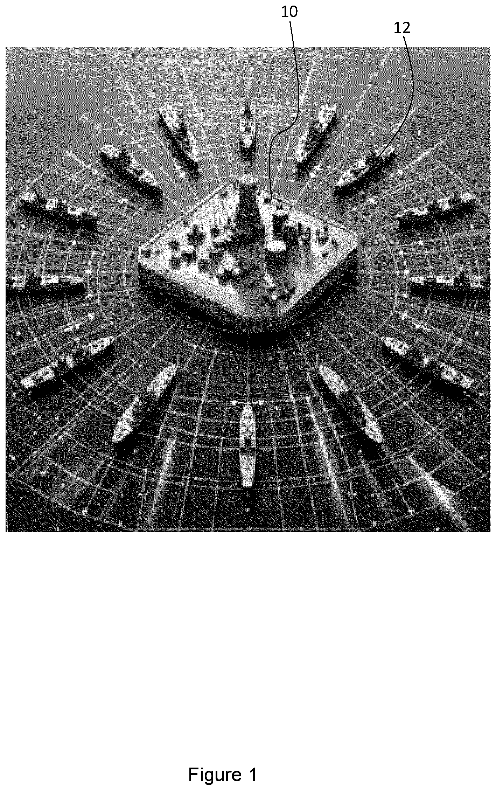

In this disclosure, the problem being addressed is how to develop an AI-aided tactics generator for uncrewed surface vessels (USVs) for protection of critical national infrastructure 10 and maritime assets 12 in face of surface vehicle attacks as illustrated in Figure 1.

The general mission profile for the pursuer USV includes initially either waiting near the protected platform or patrolling. When an approaching evader is localised and identified, the pursuer USV initiates the pursuing policy to intercept and neutralize the evader.

To accomplish this mission, an AI-aided defense strategy must overcome several challenges. The pursuer policy must navigate the USV to neutralize the evader in minimum time for protection. The steering commands must adhere to the vehicle's dynamic limits. Given the safety-critical nature of the mission, a safe distance must be maintained while tracking to avoid collision with the evader. When facing a weaponized evader USV, it is necessary to approach from behind (astern approach) to avoid defeat. Additionally, the defense strategy must be capable of tracking and countering intelligent maneuvers by the evader.

The USVs are assumed to exhibit point mass characteristics. The equations motion model for an unmanned surface vehicle relative to inertial reference frame centered at the sea surface, considering 2 degrees of freedom, are expressed as follows:

$$\dot{x} = V\cos\theta$$
$$\dot{y} = V\sin\theta$$
$$\dot{V} = a_v \qquad (1)$$
$$\dot{\theta} = w$$

In this motion model, $x$ and $y$ denote the vehicle's position coordinates, $V$ represents represents velocity magnitude, and $\theta$ indicates the heading angle. The control inputs $a_v$ and $w$ correspond to longitudinal acceleration and angular velocity, respectively.

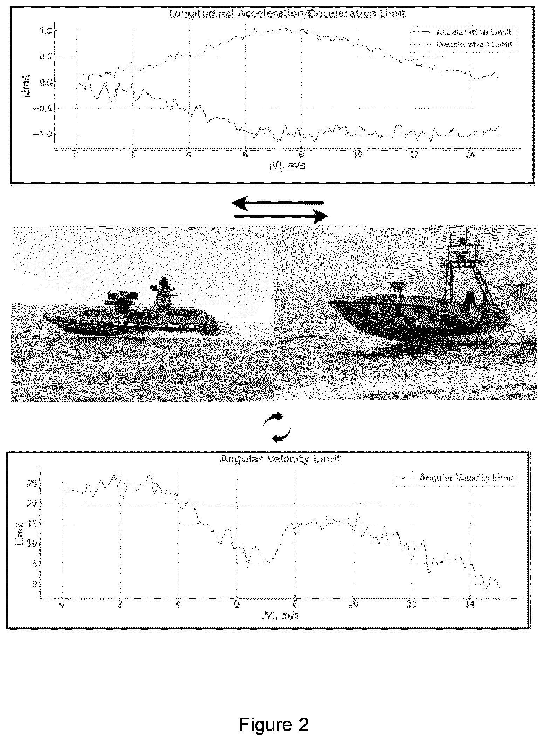

The maneuver capabilities of both pursuer and evader unmanned surface vehicles, defined by their ability to change velocity and heading, are constrained by dynamic models that are functions of current velocity of the vehicle. Figure 2 features illustrative examples of these dynamic constraints alongside several USVs currently on the market, intended purely for illustrative purposes.

In this section, we present the methodology and framework for developing AI-aided defense tactics for a pursuer USV against an evader. The baseline pursuing policy is formulated using scientific machine learning.

The principle of integrating governing physics into the training processes of machine learning models is to enhance their generalization capabilities. In accordance with this approach, the concept of scientific machine learning, implemented using Universal Ordinary Differential Equations (UODEs), has been proposed and formalized in for the purpose of scientific model discovery.

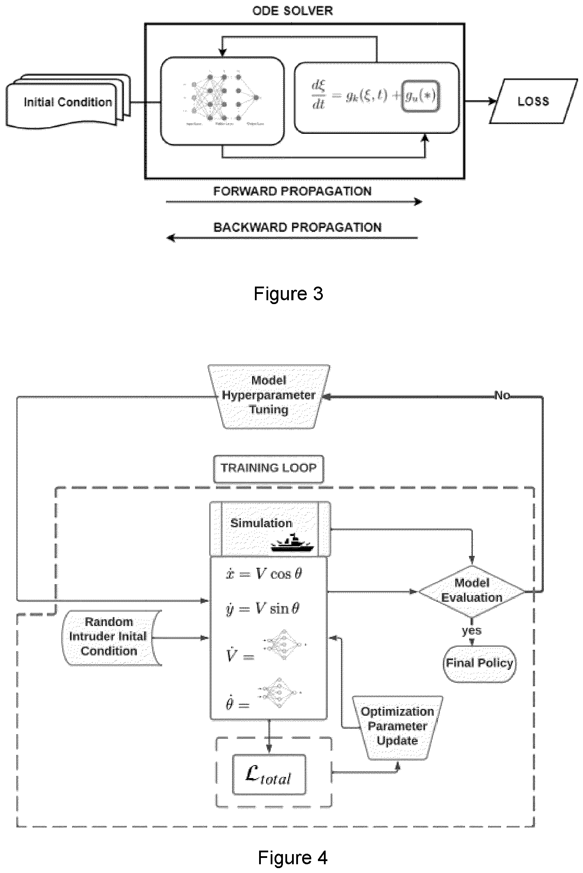

General training framework for SciML is illustrated in Figure 3.

The main idea of the UODEs involves formulating an ordinary differential equation that incorporates a mechanistic model with a universal approximator to estimate unknown dynamics. Specifically, a simple first-order ODE defined by the ground truth model $\frac{d\xi}{dt} = f(\xi, t)$ can be represented in UODE form as $\frac{d\tilde{\xi}}{dt} = g_k(\xi, t) + g_u(*)$, where the known part of the ground truth system is denoted with the function of $g_k(\xi, t)$ and $g_u(*)$ represents the unknown dynamics that we want to discover. This unknown component is approximated with a universal approximator (also merely called an approximator), specifically a neural network, expressed as $g_u(*) \approx \mathcal{NN}(X, W_{NN})$. During each forward propagation, the ODE system is simulated by solving it, concluding with the calculation of a scalar loss function, such as the mean square error between the ODE solution and real-world experimental data that represents the ground truth model. In backward propagation, continuous-time gradients of the network parameters with respect to the loss function are computed using adjoint sensitivity methods. After gradient computation, network parameters are updated using gradient descent methods.

In addressing the USV tactic generation problem, we have reformulated our pursuit-evasion problem and treating it as a scientific model discovery problem similar to framework described. The motion model presented earlier is deconstructed into components of known and unknown dynamics. Pursuer's defence tactic generation policy meaning the controls of the vehicle is conceptualized as a learnable, unknown dynamical model. It is modelled utilizing an artificial neural network parameterized with $W_{NN}$ including the network weights and biases.

$$\pi(\mathcal{X}(t), W_{NN}) = \begin{bmatrix} a_{v_{REF}}(t) \\ w_{REF}(t) \end{bmatrix} \approx \mathcal{NN}(\mathcal{X}(t), W_{NN}) \qquad (2)$$

In Equation 2, $X(t)$ represents the feature vector of the neural network policy model, which will be designed accordingly to performance objectives described in subsequent sections.

Consistent with the scientific model discovery approach described, the mechanistic motion model in Equation is reformulated to include both known and unknown dynamics as follows:

$$\underbrace{\begin{bmatrix} \dot{x} \\ \dot{y} \\ \dot{V} \\ \dot{\theta} \end{bmatrix}}_{\frac{dX}{dt}} = \underbrace{\begin{bmatrix} V\cos\theta \\ V\sin\theta \\ 0 \\ 0 \end{bmatrix}}_{g_k(X(t))} + \underbrace{\begin{bmatrix} 0 & 0 \\ 0 & 0 \\ 1 & 0 \\ 0 & 1 \end{bmatrix} \begin{bmatrix} \mathcal{NN}^{(1)}(\mathcal{X}(t), W_{NN}) \\ \mathcal{NN}^{(2)}(\mathcal{X}(t), W_{NN}) \end{bmatrix}}_{g_u(\mathcal{X}(t), W_{NN})} \qquad (3)$$

Where, In $\mathcal{NN}^{(*)}$ (), "*" shows the $*_{th}$ output of the neural network policy model.

In the UODEs framework detailed in Equation 3, learning the decision-making policy model for the pursuer involves training the artificial neural network. To do so, we need to define a performance index to enforce the pursuer for following the evader while also meeting the mission objectives. Accordingly, we have developed the following loss function to serve this purpose.

$$\mathcal{L}_{total} = \lambda_F \mathcal{L}_F + \lambda_{CE} \mathcal{L}_{CE} + \lambda_{SC} \mathcal{L}_{SC} + \lambda_{CA} \mathcal{L}_{CA} + \lambda_{AA} \mathcal{L}_{AA} \qquad (4)$$

In Equation 4, we have presented the total loss function that includes various components crafted for specific objectives and aggregated using a weighted sum approach. The component $\mathcal{L}_F$ is associated with the pursuer's objective to follow the evader. $\mathcal{L}_{CE}$ accounts for the control effort loss. $\mathcal{L}_{SC}$ addresses the pursuer's state constraints, including maximum and minimum state limits. $\mathcal{L}_{CA}$ focuses on avoiding collisions between the pursuer and the evader. Additionally, we have used $\mathcal{L}_{AA}$ component to guide the pursuer to execute the astern approach maneuver while intercepting the evader. The coefficients $\lambda_F$, $\lambda_{CE}$, $\lambda_{PC}$, $\lambda_{CA}$ and $\lambda_{AA}$ scale the importance of these components within the optimization process.

In other words, methods described herein, specifically in relation to Algorithm 5, include computing a plurality of component losses, a computing the loss (i.e. the total loss) as a weighted sum of the plurality of component losses. The plurality of component losses includes a first component loss $\mathcal{L}_F$, a second component loss $\mathcal{L}_{CE}$, a third component loss $\mathcal{L}_{SC}$, a fourth component loss $\mathcal{L}_{CA}$, and a fifth component loss $\mathcal{L}_{AA}$. Similarly, the coefficients $\lambda_F$, $\lambda_{CE}$, $\lambda_{PC}$, $\lambda_{CA}$ and $\lambda_{AA}$ may be understood to mean the first to fifth weights, respectively.

The primary objective of the pursuer is to follow and intercept the evader in the shortest possible time. To align with this goal, we have considered that minimizing the distance between the pursuer and the evader is crucial. However, it is also crucial for the pursuer to maintain a safe tracking distance from the evader to avoid collisions. Consequently, the loss component $\mathcal{L}_F$ can be expanded as follows:

$$\mathcal{L}_F = \left| DTR - \left| \vec{P}_P(t) - \vec{P}_E(t) \right| \right| \qquad (5)$$

$$\vec{P}_P(t) = \begin{bmatrix} x_P(t) \\ y_P(t) \end{bmatrix} \qquad \vec{P}_E(t) = \begin{bmatrix} x_E(t) \\ y_E(t) \end{bmatrix}$$

Where, and represent the position vectors of the pursuer and evader, respectively. *DTR* stands for the "Desired Tracking Range".

To align with the objective of minimizing capture time, we have included the minimization of angular velocity control effort in our loss definition. Minimizing control effort helps guide the pursuer to take the most efficient action, steering it toward the evader along the shortest possible path.

$$\mathcal{L}_{CE} = \frac{1}{N}\Sigma_0^N w_{REF}^2$$
$$= \frac{1}{N}\Sigma_0^N \left(\mathcal{N}\mathcal{N}^{(2)}(\mathcal{X}(t), W_{NN})\right)^2 \qquad (6)$$

For state constraints, we have implemented continuous upper and lower bounds on the heading angle to prevent the pursuer from rotating around itself with divergent behavior during training iterations. This approach helps to ensure a more stable training process. Additionally, we have included endpoint constraints on velocity and its direction to further guide the pursuer's movement and enhance the effectiveness of the training.

$$\mathcal{L}_{SC} = \lambda_{SC1}\left(\left\|relu(\theta(t) - \theta_{upper}\right\| + \left\|relu(-\theta(t) + \theta_{lower}\right\|\right)$$
$$+ \lambda_{SC2}\left(\left(V_x^P(t_f) - V_x^E(t_f)\right)^2 + \left(V_y^P(t_f) - V_y^E(t_f)\right)^2\right) \qquad (7)$$

Where, *relu*(*) denotes the rectified linear unit (ReLU) function, which outputs the input value if the input is greater than zero; otherwise, it outputs zero. $\theta$ is the pursuer's heading angle and $\theta_{upper}$, $\theta_{lower}$ are the upper and lower limits of the heading angle. Furthermore, $V_x^P, V_y^P$ and $V_x^E, V_y^E$ are the velocity components of the pursuer and evader along the x and y directions, respectively.

Considering safety requirements, we have implemented the collision avoidance loss function between the pursuer and the evader as follows:

$$\mathcal{L}_{CA} = \Sigma_1^N \left| DCAR - \left| relu(\vec{P}_P(t) - \vec{P}_E(t)) \right| \right| \qquad (8)$$

Where, *DCAR* stands for "Desired Collision Avoidance Range" which is determined by considering the size information of the example USVs involved.

To successfully execute an astern approach for intercepting the evader, we have designed a loss function that operates within the evader's body reference frame. This frame of reference provides key information about the relative positioning of the pursuer, specifically indicating whether the pursuer is ahead of or behind the evader. This orientation is essential for adjusting the pursuer's strategy to either close in from behind or adjust its path to move into an astern position effectively.

$$\mathcal{L}_{AA} = \left\|(relu(-\tilde{R}_x^{EBF}(t))\right\| + M() * \left\|(relu(DSD - |\tilde{R}_y^{EBF}(t)|)\right\| \qquad (9)$$

Where, $\tilde{R}_x^{EBF}(t)$ and $\tilde{R}_y^{EBF}(t)$ are the x and y components of the relative position vector between the pursuer and the evader, expressed in the evader's body frame (EBF). *DS* stands for "Desired Separation Distance". Additionally, *M*() is a mask function which assigns a value of 0 when the pursuer is positioned behind the evader, and a value of 1 when the pursuer is ahead of the evader.

$$M() = \begin{cases} 1, & if R_x^{EBF}(t) \leq 0 \\ 0, & \text{otherwise} \end{cases} \qquad (10)$$

From Equation 9, astern approach loss function $\mathcal{L}_{AA}$ consists of two components. The first component aims to guide the pursuer to decrease the distance to the evader and follow from behind, penalizing the pursuer when it is positioned in front of the evader. The second component ensures that the pursuer maintains a safe separation (*DSD*) from the target line when it is in front of the evader, addressing safety requirements. Together, these components effectively constitute the astern approach maneuver.

To incorporate vehicle dynamics as control constraints, we have approximated the system dynamic limits using shallow neural networks (One Hidden Layer Networks), $\mathcal{NN} : \mathbb{R}^1 \to \mathbb{R}^1$. These networks take the vehicle velocity as input and output the corresponding vehicle dynamic limits. The training utilizes a dataset derived from real-world experiments involving an experimental USV. Furthermore, physical constraints are included as a Lagrangian penalty in the optimization objective, following the physics-informed neural networks framework, to ensure the limit functions behave well and generalize effectively. An example objective function for training the longitudinal acceleration upper limit model is provided below.

$$J = MSE(y_{synthetic} - \hat{y}) + \lambda relu(-\hat{y}) \ (11)$$

The equation utilizes *MSE*() to denote the mean squared error between, $y_{synthetic}$ and y representing the synthetic data from the vehicle dynamics model and the network approximation value, respectively. The coefficient serves as a loss weight, balancing the importance within the objective function. The *relu*() function is employed to penalize the model, preventing negative values for the acceleration upper limit.

After approximating the vehicle dynamics models with shallow neural networks, we integrated the system dynamics into the scientific machine learning training process by employing a neuron-wise adaptive tanh activation function in the final layer of the policy network.

$$Adaptive \ Tanh := \frac{e^{nax} - e^{-nax}}{e^{nax} + e^{-nax}} \ (12)$$

The main idea of adaptive activation functions is to make them trainable to enhance their ability to model nonlinear behavior. In Equation 12, $\alpha$ is the trainable parameter used to adjust the slope of the tanh activation function. Moreover, Ameya et al. highlighted that adding a non-trainable scaling factor, *n*, into the equation contributes to the convergence speed. These adaptive activation functions can be applied either layer-wise, where a single trainable parameter is used uniformly across the layer, or neuron-wise, with each neuron having its own independent trainable parameter, matching the number of neurons in the layer.

This choice of activation function allows for dynamic scaling and adjustment of outputs, ensuring that the network's response remains within the physically plausible limits dictated by the vehicle's dynamics.

Employing the neuron-wise adaptive Tanh activation function in the final layer of the policy network effectively bounds the output variables within the range [â^'1,1]. Subsequently, a dynamic re-scaling operation maps this [â^'1,1] interval to the current minimum and maximum limits as determined by the output of the trained vehicle dynamic's limit networks. This mechanism matches the real-world limit values, thus integrating the policy outputs directly with the system's dynamic constraints and preventing any violation of these limits. The re-mapping operation is given by the following formula.

$$a_{V_{REF}} = \mathcal{NN}^{(1)}(\mathcal{X}(t), W_{NN}) \frac{a_V^{max}(V(t)) - a_V^{min}(V(t))}{2}$$
$$+ \frac{a_V^{max}(V(t)) + a_V^{min}(V(t))}{2} \qquad (13)$$

$$w_{REF} = \mathcal{NN}^{(1)}(\mathcal{X}(t), W_{NN}) \frac{w^{max}(V(t)) - w^{min}(V(t))}{2}$$
$$+ \frac{w^{max}(V(t)) + w^{min}(V(t))}{2} \qquad (14)$$

Where, $a_V^{max}, a_V^{min}, w^{max}, w^{min}$ are the corresponding trained neural network models used for approximating the maximum and minimum longitudinal acceleration and angular velocity limits of the vehicle, respectively.

After establishing our performance index through specific loss functions and integrating vehicle dynamics, we conducted our scientific machine learning optimization processes using the Julia programming language. This choice was made due to Julia's high performance in numerical and scientific computing, effectively facilitating complex computations and model training.

To perform the optimization loop, we defined optimization scenarios that establish the initial conditions and movement behaviors for both the pursuer and the evader.

For training purposes, we have considered to train our pursuer agent against a simple evader, which lacks intelligence or the capability to perform maneuvers during simulations. This simplification means that throughout a simulation, the evader maintains a constant speed and heading angle.

Specifically:

- The initial position of the evader is stochastically sampled from all quadrants within a 500-meter length square centered at the origin, denoted as $x_0^E, y_0^E \in \mathcal{U}$ (-500$m$, 500m).

- The initial velocity magnitude of the evader is sampled from a uniform distribution $V_0^E \in \mathcal{U}(1\frac{m}{s}, 17\frac{m}{s})$ and remains constant throughout a single simulation.

- The initial heading angle of the evader is sampled from a uniform distribution $\theta_0^E \in \mathcal{U}$ (-180°, 180°) and remains constant throughout a single simulation.

In this way, the evader is trained to output a constant velocity and a constant heading angle of the evader.

For the pursuer, we created a structured initial conditions grid:

- The initial position of the pursuer is distributed over 10 equally spaced intervals on circles centered at the origin with radius of 50 meters and 100 meters, resulting in a total of 20 distinct initial positions.

- The initial velocity magnitude of the pursuer is divided into 5 evenly spaced samples within the range $[1\frac{m}{s}, 17\frac{m}{s}]$

- The initial heading angle of the pursuer is divided into 10 evenly spaced samples spanning [-180°, 180°]

This configuration of initial conditions for the pursuer generates a grid by taking permutations of the states, resulting in 2000 distinct initial condition combinations.

The overall policy optimization framework, which utilizes SciML training for our pursuit-evasion formulation, is illustrated in Figure 2 and detailed in Algorithm 5.

Algorithm 5

Input: ODE Solver(ODE, IC's),

Epoch Size: N, Mini-Batch Size: M

Data: Initial Conditions Grid for Pursuer

Initialization:Initilization of Network Weights, $\theta_{NN}$ Optimization Variable:, $W_{NN}$

$epoch = 1,2, \dots, N$

Generate Minibatches $Minibatch = 1,2, \dots$

Pursuer IC's $in$ Minibatch

$x^E(t_0) \leftarrow$ Sample the Evader's Initial Condition

$x(t)_i, u(t)_i \leftarrow$ Run the $simulation(IC_i, x^E(t_0), W_{NN})$

Compute Loss, $\mathcal{L}_i \leftarrow x(t)_i$

Compute Gradient, $\left(\frac{d\mathcal{L}_i}{dW_{NN}}\right)_i \leftarrow \mathcal{L}_i, x(t)_i, u(t)_i, W_{NN}$

Compute Mean Loss, $\mathcal{L}_{mean} = \frac{1}{M}\Sigma_{i=1}^M \mathcal{L}_i$ $Compute\ Mean\ Gradient$:

$$\left(\frac{d\mathcal{L}}{dW_{NN}}\right)_{mean} = \frac{1}{M}\Sigma_{i=1}^M \left(\frac{d\mathcal{L}_i}{dW_{NN}}\right)_i$$

$Gradient\ Descent\ with\ Adam\ Optimizer$:

$$W_{updated} \leftarrow \mathcal{L}_{mean}, \left(\frac{d\mathcal{L}}{dW_{NN}}\right)_{mean} \quad \text{Update Network Weights, } W_{NN}$$

$\leftarrow W_{updated}$

The SciML training flowchart in Figure 4 and corresponding Algorithm 5 can be briefly explained as follows: The initial conditions' training grid for pursuer states is given as input to the algorithm. The first step of the algorithm involves initializing the weights of the neural network that models the decision-making policy. After successful initialization, mini batches are randomly formed from the initial condition grid created for the pursuer agent. Then, a simulation is run for each initial condition in the mini batches. For each mini-batch simulation, the initial condition states for the evader are sampled stochastically as explained. Subsequently, the defined loss functions are computed along with the policy gradient with respect to total loss given in Equation 4. After completing all the initial conditions in a mini batch, the average loss and gradient calculations are performed. This makes conducting gradient descent over the policy network possible. After updating the network weights for all mini batches, a new epoch starts. At the beginning of a new epoch, mini batches are created randomly. The same steps are followed until convergence is achieved.

In other words, Algorithm 5 summarises a computer-implemented method of training a pursuer neural network agent. The method may be summarised as providing an evader neural network agent trained to update iteratively a plurality of dynamic parameters of an evader, a pursuer neural network agent initialised to update iteratively a plurality of approximators for a pursuer, and an ordinary differential equation solver configured to update a plurality of dynamic parameters of the pursuer based on the updated approximators. The dynamic parameters of each of the evader and the pursuer comprise at least one of position, heading angle, and velocity.

The method further comprises providing initial dynamic parameters of the pursuer. The initial dynamic parameters may also be called initial conditions, ICs. The method may comprise dividing the initial dynamic parameters of the pursuer into mini batches.

The method may comprise sampling the initial dynamic parameters from a set of initial dynamic parameters of the evader, running a simulation involving the pursuer neural network agent pursuing the evader neural network agent based on the sampled initial dynamic parameters, computing a loss based on the dynamic parameters of the pursuer from the ordinary differential equation solver and the dynamic parameters of the evader from the evader neural network agent, and optimising weights of the pursuer neural network agent based on the computed loss. More specifically, the method may comprise separating the set of initial dynamic parameters of the pursuer into a plurality of mini batches, wherein sampling initial dynamic parameters from a set of initial dynamic parameters of the evader, running the simulation involving the pursuer neural network agent, and computing a loss based on the output from the pursuer neural network agent are performed for each mini batch of the plurality of mini batches of initial dynamic parameters of the pursuer.

Since the simulation may be run for each mini batch, the loss may also be computed for each mini batch. For example, the method may comprise computing an average loss using the computed loss for all mini batches, wherein optimising the weights comprises optimising the weights of the pursuer neural network agent to minimise the average loss. More specifically, computing a mean loss using the loss computed for each mini batch, wherein optimising the weights of the pursuer neural network agent based on the computed loss comprises optimising the weights of the pursuer neural network agent using the mean computed loss.

running the simulation comprises: performing forward propagation of the evader neural network agent to update the plurality of dynamic parameters based on the sampled initial dynamic parameters; and performing forward propagation of the pursuer neural network agent to update the plurality of dynamic parameters based on initial dynamic parameters of the pursuer, the updated dynamic parameters from the evader neural network agent.

This algorithm may be provided as a set of instructions stored on non-transitory computer-readable media that, when executed by at least once processor, causes the at least one processor to perform the computer-implemented method described here. The instructions may also be provided as transitory computer-readable media when being loaded onto the non-transitory storage media.

The resulting pursuer neural network agent may be installed onto a pursuer vehicle comprising at least one control surface for moving the pursuer vehicle, at least one sensor for sensing at the at least one dynamic parameter of an evader vehicle, at least one processor, and storage having the pursuer neural network agent stored thereon. In this way, the pursuer neural network agent may cause the at least one processor to control the at least one control surface to move the pursuer vehicle in response to the at least one dynamic parameter of the evader vehicle

In this section, we provide a brief overview of the final form of the policy architecture, hyperparameters used in the training processes and present the results from various simulation scenarios. Our simulations includes several cases: a simple evader heading directly towards infrastructure, a scenario incorporating actuator delay, and a scenario featuring a maneuvering evader. These settings help to evaluate the robustness and efficiency of our developed policy under different conditions.

As outlined in Equation 2, we have modeled pursuer agent's policy by using a neural network architecture. The loss components, defined in Equations 5-9 based on mission requirements, contribute to designing the feature vector $X(t)$ $\in \mathcal{R}^{11}$. This vector contains essential information for the agent's decision-making at time t.

$$\mathcal{X}(t) = \begin{bmatrix} \vec{\tilde{R}}_{P2E}^{I}(t) \\ \vec{\tilde{R}}_{P2E}^{EBF}(t) \\ \dot{R}_{P2E}(t) \\ ||\vec{V}_{P}(t)|| \\ \vec{V}_{P}(t) \\ \vec{V}_{E}(t) \\ \dot{\lambda}_{LOS_{P2E}}(t) \end{bmatrix} \qquad (15)$$

The vectors $\vec{\tilde{R}}_{P2E}^{I}(t), \vec{\tilde{R}}_{P2E}^{EBF}(t)$ denote the relative distance between the pursuer and the evader, expressed in the inertial reference frame and the evader body fixed reference frame, respectively. $\dot{R}_{P2E}(t)$ indicates the time derivative of the relative position vector, highlighting the dynamic distance changes between pursuer and evader over time. The velocity vectors of the pursuer and evader are denoted as $\vec{V}_{P}(t)$ and $\vec{V}_{E}(t)$, with $||\vec{V}_{P}(t)||$ specifying the magnitude of the pursuer's velocity. Lastly, $\dot{\lambda}_{LOS_{P2E}}(t)$ represents the rate of change of the line-of-sight angle between the pursuer and the evader, capturing the angular dynamics of their engagement.

The specific details of the policy architecture, including layer configurations, activation functions, and other number of parameters, are summarized in Table 1

Table 1: Neural network polic architecture

| Layer | Type | # units | Activation |
|---|---|---|---|
| Input | Scaling | 11 | - |
| Layer 1 | Dense | $11*n_1$ | Tanh |
| Layer 2 | Dense | $n_1 * n_2$ | Tanh |
| Layer 3 | Dense | $n_2 * 2$ | NA-Tanh |
| Output | Re-Scaling | 2 | - |

Table 1 shows that the neural network architecture consists of three layers, each with 16 neurons ($n_1 = n_2 = 16$), and includes Scaling and Re-Scaling layers at the input and output stages, respectively. Min-max scaling is applied for the scaling operation, and re-scaling follows the method described in Section 3.4 at Equation 14. The activation function for each layer is the *tanh* function, except for the last layer, which uses the *NA - tanh* function—a neuronwise adaptive tanh function.

SciML's policy training process involves tuning hyper-parameters such as cost coefficients, mini-batch size, simulation time, and learning rate. We have used the grid search algorithm for this purpose. The complete training setup and the optimized hyper-parameter values are summarized in Table 2.

Table 2: Training Setup and Hyperparameters

| Object | Component/Description |
|---|---|
| **ODE Solver** | Tsit5 (Tsitouras 5/4 Runge-Kutta method) <br> Adjoint Method $\rightarrow$ Interpolating Adjoint <br> $\Delta t \rightarrow$ Variable <br> Time Span=[0, 80], *s* <br> Absolute/Relative Tolerances = $10^{-5}$ |
| **Cost Coefficients** | $$\lambda_F = \frac{t}{8}$$ $\lambda_{CE} = 0.05$, $\lambda_{CA} = 1$ <br> $\lambda_{SC1} = 100$, $\lambda_{SC2} = 10$ <br> $\lambda_{AA} = 0.3$ |
| **Cost Parameters** | *DTR* = 20, *m*, *DCAR* = 10, *m* <br> *DSD* = 20, *m* |
| **Optimizer** | ADAM <br> Mini-Batch Size, *M* = 1 <br> Learning Rate, $\zeta$ = 0.0003 <br> Momentum decay $\beta$ = (0.9, 0.999) |

Simple evader case 1

In this section, we present the simulation results of a pursuer using the SciML policy against a simple evader, which directly approaches the infrastructure at a constand speed and heading without any strategic maneuvering. The initial conditions for both the pursuer and evader are summarized in Table 3.

Table 3: Scenario-1 Initial Conditions Setup

| Vehicle | Initial Conditions |
|---|---|
| **Pursuer** | $x_0 = y_0 = 0 \ V_0 = 0$ <br> $V_0 = 0$ <br> $\theta_0 = 90°$ |
| **Evader** | $x_0 = -700, m \ y_0 = 700, m$ <br> $V_0 = 17, \frac{m}{s}$ <br> $\theta_0 = -45°$ |

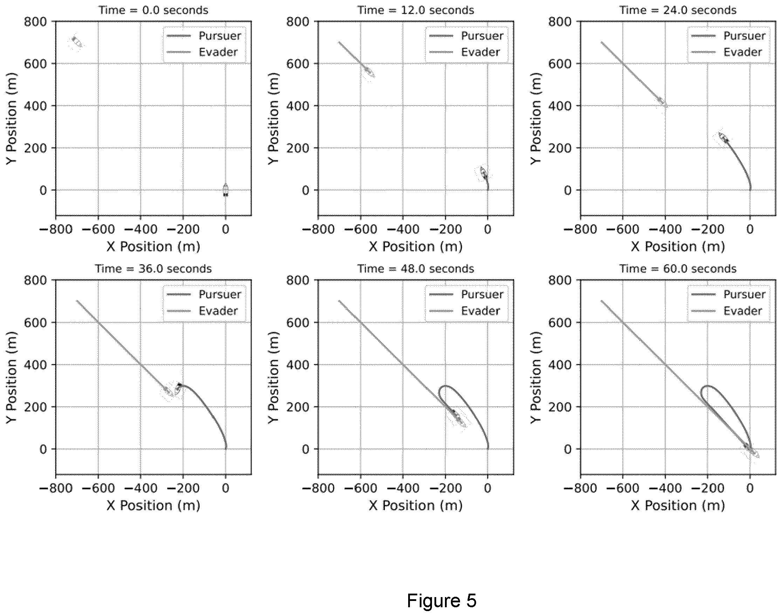

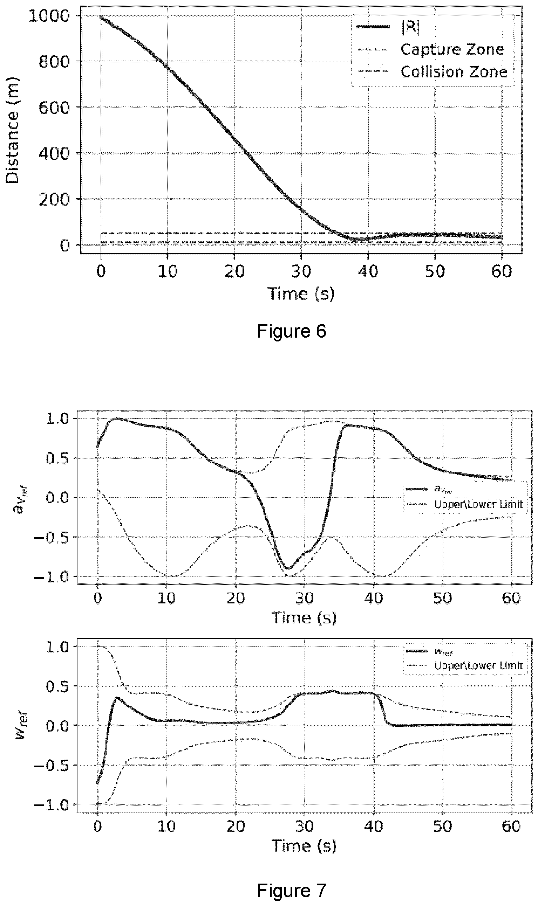

Figure 5 displays the time-elapsed trajectories of both the pursuer and evader, with the pursuer's path in blue and the evader's in orange, as the evader heads straight for the infrastructure. Figure 6 illustrates the changing distance between the pursuer and evader over time. The simulation results show that the pursuer, guided by our trained policy, successfully maneuvers towards the capture zone and maintains tracking of the evader. A key aspect of performance highlighted here is that the pursuer executes an astern approach to maintain safety. Additionally, Figure 6 indicates that the pursuer keeps a safe distance, minimizing collision risks. These findings confirm that the trained policy meets the defined performance requirements effectively.

Figure 7 shows the SciML policy's commanded reference longitudinal acceleration and angular velocity over time. The blue lines represent the control action values generated by the policy network, while the red dashed lines show the system dynamics' upper and lower boundaries. The data are normalized to the range of [-1,1], with +1 and -1 representing the upper and lower limits, respectively. This normalization is due to confidentiality reasons. The results demonstrate that the trained policy operates within the vehicle's dynamic limits, with no commands exceeding these boundaries, which is a direct outcome of the vehicle dynamics integration strategy employed. Additionally, the action values from our policy exhibit a bang-bang control type, typical of minimum time control laws, indicating that the policy functions as an optimal controller.

Simple evader scenario 2

In this scenario, we followed the same setup as in Scenario-1, with the initial conditions of a simple evader summarized in Table 5. However, to assess the generalization capability of our approach, we introduced actuator delay into the system dynamics as a form of uncertainty. It is important to note that the policy optimization process did not originally account for actuator delay.

Table 4: Pursuer and simple evader elapsed time trajectories for scenario-1

| SCENARIO-1 INITIAL CONDITIONS SETUP | |
|---|---|
| **Vehicle** | **Initial Conditions** |
| **Pursuer** | $x_0 = y_0 = 0$ <br> $V_0 = 0$ <br> $\theta_0 = 90°$ |
| **Evader** | $x_0 = 500, m \ y_0 = 600, m$ <br> $V_0 = 14, \frac{m}{s}$ <br> $\theta_0 = -130°$ |

The reference longitudinal acceleration and angular velocity commanded by the SciML policy are subject to a first-order dynamic actuator delay, modeled as follows:

$$a_{X_{COM}} = \mathcal{NN}^{(1)}(\mathcal{X}(t), W_{NN})$$
$$w_{COM} = \mathcal{NN}^{(2)}(\mathcal{X}(t), W_{NN})$$
$$\dot{a}_x = \frac{(a_{x_{COM}} - a_x)}{\tau} \qquad (16)$$
$$\dot{w} = \frac{(w_{COM} - w)}{\tau}$$

In Equation 16, $a_{X_{COM}}$ and $w_{COM}$ represent the commanded control actions from the SciML policy. The variables $a_X$ and $w$ denote the actual realized control actions, which are affected by actuator delay characterized by a time constant $\tau$ = 1 seconds.

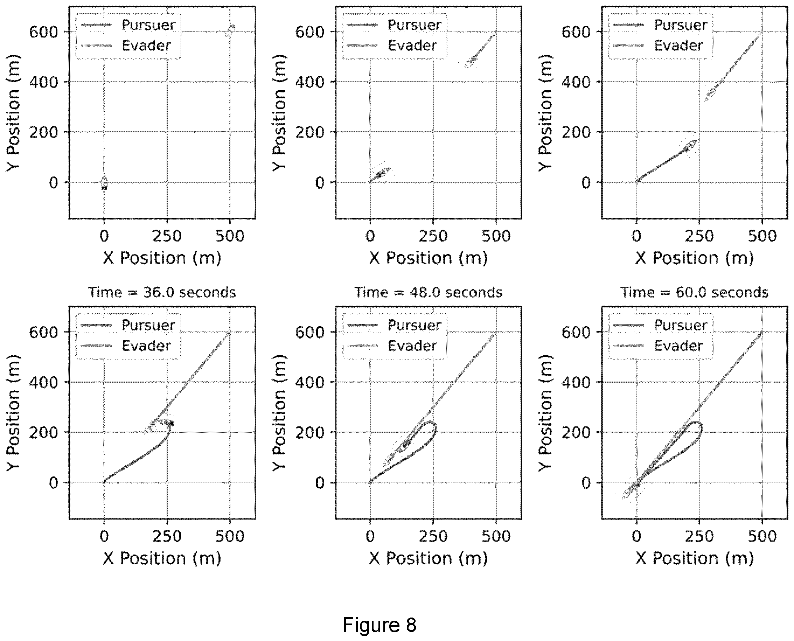

Figure 5 displays the time-elapsed trajectories of the pursuer and evader in Scenario-2, with the pursuer's path marked in blue and the evader's in orange. Figure 7 tracks the relative distance between the pursuer and evader over time. Additionally, Figure 8 illustrates the time evolution of the policy's commanded reference control actions and the realized actions in Scenario-2. The blue lines represent the reference control action values generated by the policy network, while the orange lines show the realized control actions affected by actuator delay dynamics. Despite the the presence of significant actuator delay, which was not accounted for during the policy training, the simulation results show that the pursuer, guided by our trained policy, effectively approaches the evader and skillfully executes the astern approach maneuver. This demonstrates the generalization capability and the robustness of the policy in handling dynamics not explicitly included in its training.

Figure 8 illustrates the time evolution of the policy's commanded reference control actions and the realized actions in Scenario-2. The blue lines represent the reference control action values generated by the policy network, while the orange lines show the realized control actions affected by actuator delay dynamics. The red dashed lines indicate the boundaries set by the system dynamics. Despite the presence of actuator delays, the trained policy demonstrates effective generalization capability. The commands generated by the policy adapt well to the dynamics encountered, effectively fulfilling the mission requirements.

Although there is a performance degradation compared to the Scenario-1 results, it remains within acceptable levels, as no unstable behavior is observed. The pursuer effectively tracks the evader and manages to avoid collision risks. However, unlike in Scenario-1, the pursuer does not maintain a consistent distance within the capture zone after executing an astern approach, due to the actuator delay impacting its ability to accelerate promptly. This performance loss could be eliminated by incorporating delay dynamics into the training processes, which would allow the policy to better handle delays.

Manoeuvring Evader: Scenario-3

To further assess the generalization capability of our trained SciML policy, we conducted tests against an evader executing an S-curve-like trajectory, representing an out-of-distribution scenario. Since, this type of evader trajectory was not encountered during the training phase; instead, as previously mentioned, the policy was trained against simpler evaders maintaining constant velocity and heading throughout a single simulation. This testing scenario helps evaluate how well the policy adapts to complex and unexpected maneuvers from the evader.

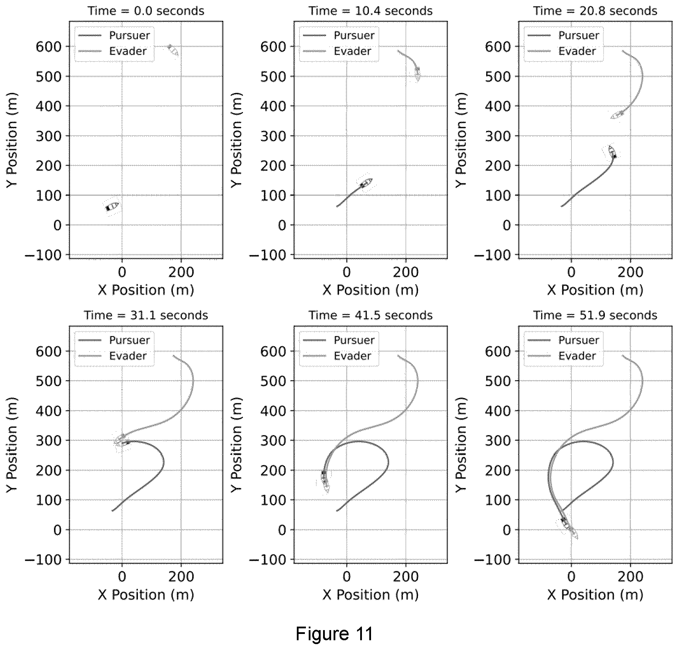

Figure 11 illustrates the elapsed time trajectories of the pursuer and evader, showing the paths from the initial to the final time. The pursuer's path is depicted by the blue line, while the evader's path, following a predefined S-curve-like trajectory, is shown in orange. Despite the pursuer's policy not being specifically trained to handle maneuvering evaders, the simulation results demonstrate the policy's exceptional generalization ability. It successfully intercepts the evader and maintains effective tracking throughout the scenario.

In this research, we addressed the USV tactic generation problem for protection of critical national infrastructure and maritime assets in face of surface vehicle attacks. We have conceptualized the pursuit-evasion problem as a scientific model discovery problem, wherein the tactic generation policy is treated as a learnable, unknown dynamical model that governs the relative system state.

Our approach has shown outstanding performance through extensive simulations, even in scenarios that significantly deviate from the training domain. Moreover, our approach effectively mitigates various challenges, including achieving near-optimal minimum time-to-capture, diminishing the reliance on extensive training datasets, enhancing convergence speed, and lowering computational demands. We illustrate the results across a wide range of applicable scenarios.

These results underscore the potential of scientific machine learning to revolutionize the field of pursuit-evasion and, by extension, the broader domain of security and defense. The methodology holds promise for various security and defense mechanisms, offering a scalable solution to many similar pursuit-evasion problems including one to many and many to many scenarios in both defensive and offensive setting. Currently, we are focused on implementation of this tactic generator on actual USV platforms to demonstrate the real-life performance of the proposed approach.

As a future study, several considerations arise. Firstly, although we have demonstrated the robustness of our trained policy in effectively capturing an maneuvering evader, testing and refining our algorithm against an intelligent evader would be a valuable next step. This could involve training our agent to confront such evaders using a more sophisticated area defense strategy. Additionally, developing an intelligent mission planner that dynamically switches tactics based on the evader's behavior could greatly enhance operational adaptability and effectiveness. Another important area for further study involves training a pursuer to navigate multi-obstacle environments, balancing obstacle avoidance with the primary goal of capturing the evader. These considerations will help advance the capabilities of our systems in complex and dynamically changing scenarios.

**Claims**

1. A computer-implemented method of training a pursuer neural network agent, the method comprising:

   providing an evader neural network agent trained to update iteratively a plurality of dynamic parameters of an evader, a pursuer neural network agent initialised to update iteratively a plurality of approximators for a pursuer, and an ordinary differential equation solver configured to update a plurality of dynamic parameters of the pursuer based on the updated approximators;
   sampling initial dynamic parameters from a set of initial dynamic parameters of the evader;
   running a simulation involving the pursuer neural network agent pursuing the evader neural network agent based on the sampled initial dynamic parameters;
   computing a loss based on the dynamic parameters of the pursuer from the ordinary differential equation solver and the dynamic parameters of the evader from the evader neural network agent; and
   optimising weights of the pursuer neural network agent based on the computed loss.

2. The computer-implemented method of Claim 1, further comprising:

   separating the set of initial dynamic parameters of the pursuer into a plurality of mini batches,
   wherein sampling initial dynamic parameters from a set of initial dynamic parameters of the evader, running the simulation involving the pursuer neural network agent, and computing a loss based on the output from the pursuer neural network agent are performed for each mini batch of the plurality of mini batches of initial dynamic parameters of the pursuer.

3. The computer-implemented method of Claim 2, further comprising:

   computing a mean loss using the loss computed for each mini batch,
   wherein optimising the weights of the pursuer neural network agent based on the computed loss comprises optimising the weights of the pursuer neural network agent using the mean computed loss.

4. The computer-implemented method of any preceding claim, wherein running the simulation comprises:

   performing forward propagation of the evader neural network agent to update the plurality of dynamic parameters based on the sampled initial dynamic parameters; and
   performing forward propagation of the pursuer neural network agent to update the plurality of dynamic parameters based on initial dynamic parameters of the pursuer, the updated dynamic parameters from the evader neural network agent.

5. The computer-implemented method of any preceding claim, further comprising:

   providing initial dynamic parameters of the pursuer;
   dividing the initial dynamic parameters of the pursuer into mini batches;
   running the simulation for each mini batch; and
   computing the loss for each mini batch.

6. The computer-implemented method of Claim 5, further comprising:

   computing an average loss using the computed loss for all mini batches,

wherein optimising the weights comprises optimising the weights of the pursuer neural network agent to minimise the average loss.

7. The computer-implemented method of any preceding claim, wherein the dynamic parameters of each of the evader and the pursuer comprise at least one of: position, heading angle, and velocity.

8. The computer-implemented method of any preceding claim, wherein computing a loss based on the dynamic parameters of the pursuer from the ordinary differential equation solver and the dynamic parameters of the evader from the evader neural network agent, comprises:

   computing a plurality of component losses; and
   computing the loss as a weighted sum of the plurality of component losses.

9. The computer-implemented method of Claim 8, wherein computing the loss as a weighted sum of the plurality of component losses uses a formula:

   calculating a first component loss $\mathcal{L}_F$ of the plurality of component losses associated with an objective of the pursuer in following the evader using $\mathcal{L}_F = |DTR - |\vec{P}_P(t) - \vec{P}_E(t)||$, where $DTR$ is a desired tracking range,

   $$\vec{P}_P(t) = \begin{bmatrix} x_P(t) \\ y_P(t) \end{bmatrix} \quad \text{and} \quad \vec{P}_E(t) = \begin{bmatrix} x_E(t) \\ y_E(t) \end{bmatrix}$$

   , where $\vec{P}_P(t)$ is a position of the pursuer, $x_P(t)$ is a position of the pursuer along an x direction, $y_P(t)$ is position of the pursuer along a y direction, $\vec{P}_E(t)$ is a position of the evader, $x_E(t)$ is a position of the evader along the x direction, and $y_E(t)$ is a position of the evader along the y direction;

   calculating a second component loss $\mathcal{L}_{CE}$ of the plurality of component losses using

   $$\mathcal{L}_{CE} = \frac{1}{N}\sum_0^N w_{REF}^2$$
   $$= \frac{1}{N}\sum_0^N \left(\mathcal{N}\mathcal{N}^{(2)}(\mathcal{X}(t), W_{NN})\right)^2$$

   , where $\mathcal{N}\mathcal{N}^{(*)}(X(t), W_{NN})$, "*" shows the $*_{th}$ output of the pursuer neural network agent during the simulation, and N is a number of iterations during the simulation;

   calculating a third component loss $\mathcal{L}_{SC}$ of the plurality of component losses using

   $$\mathcal{L}_{SC} = \lambda_{SC1}\left(\left|\left|relu(\theta(t) - \theta_{upper}\right|\right| + \left|\left|relu(-\theta(t) + \theta_{lower}\right|\right|\right)$$
   $$+ \lambda_{SC2}\left(\left(V_x^P(t_f) - V_x^E(t_f)\right)^2 + \left(V_y^P(t_f) - V_y^E(t_f)\right)^2\right)$$

   , where $relu(*)$ denotes the rectified linear unit (ReLU) function, $\theta$ is the pursuer's heading angle and $\theta_{upper}$, $\theta_{lower}$ are the upper and lower limits of the heading angle, $V_x^P, V_y^P$ and $V_x^E, V_y^E$ are the velocity components of the pursuer and evader along the x and y directions, respectively;

   calculating a fourth component loss $\mathcal{L}_{CA}$ of the plurality of component losses using

   $$\mathcal{L}_{CA} = \sum_1^N \left|DCAR - \left|relu(\vec{P}_P(t) - \vec{P}_E(t))\right|\right|$$

   , where $DCAR$ stands for "Desired Collision Avoidance Range",

   calculating a fifth component loss $\mathcal{L}_{AA}$ of the plurality of component losses using

   $$\mathcal{L}_{AA} = ||(relu(-\tilde{R}_x^{EBF}(t))|| + M()*||(relu(DSD - |\tilde{R}_y^{EBF}(t)|)||$$

   , where $\tilde{R}_x^{EBF}(t)$ and $\tilde{R}_y^{EBF}(t)$ are x and y components of the relative position between the pursuer and the evader, expressed in the evader's body frame, EBF, $DS$ stands for "Desired Separation Distance", and $M()$ is a mask function which assigns a value of 0 when the pursuer is positioned behind the evader, and a value of 1 when the pursuer is ahead of the evader.

10. The computer-implemented method of Claim 9, wherein computing the loss as a weighted sum of the plurality of component losses uses $\mathcal{L}_{total} = \lambda_F \mathcal{L}_F + \lambda_{CE} \mathcal{L}_{CE} + \lambda_{SC} \mathcal{L}_{SC} + \lambda_{CA} \mathcal{L}_{CA} + \lambda_{AA} \mathcal{L}_{AA}$ , where $\lambda_F$ is first a weight associated with the first loss component $\mathcal{L}_F$ , $\lambda_{CE}$ is a second weight associated with the second loss component $\mathcal{L}_{CE}$ , $\lambda_{SC}$ is a third weight associated with the third loss component $\mathcal{L}_{SC}$ , $\lambda_{CA}$ is a fourth weight associated with the fourth loss component $\mathcal{L}_{CA}$ , and $\lambda_{AA}$ is a fifth weight associated with the fifth loss component $\mathcal{L}_{AA}$ .

11. The computer-implemented method of any preceding claim, wherein the dynamic parameters include a heading angle, a position, and a velocity.

12. The computer-implemented method of Claim 11, wherein the evader neural network agent is trained to output a constant velocity and a constant heading angle of the evader.

13. A transitory, or non-transitory, computer-readable medium having instructions stored thereon that, when executed by at least one processor, causes the at least one processor to perform the computer-implemented method of any preceding claim.

14. A pursuer vehicle comprising:

at least one control surface for moving the pursuer vehicle;
at least one sensor for sensing at least one dynamic parameter of an evader vehicle;
at least one processor; and
storage having the pursuer neural network agent trained according to any of Claims 1 to 12 stored thereon, the pursuer neural network agent causing the at least one processor to control the at least one control surface to move the pursuer vehicle in response to the at least one dynamic parameter of the evader vehicle.

Figure 1

Figure 2

Figure 3

Figure 4

Figure 5

Figure 6

Figure 7

Figure 8

Figure 9

Figure 10

Figure 11

Europäisches
Patentamt

European
Patent Office

Office européen
des brevets

## EUROPEAN SEARCH REPORT

**Application Number**

EP 24 27 5077

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CARLOS ESTEVE-YAG\"UE ET AL: "Finite-difference least square methods for solving Hamilton-Jacobi equations using neural networks", ARXIV.ORG, CORNELL UNIVERSITY LIBRARY, 201 OLIN LIBRARY CORNELL UNIVERSITY ITHACA, NY 14853, 15 June 2024 (2024-06-15), XP091790460, * abstract * * sections 5.2, 5.2.3, 5.2.4 * | 1-14 | INV. G06N3/006 G06N3/042 G06N3/045 G06N3/084 G06N5/01 G06N3/0985 |
| X | YANG FUYUNXIANG ET AL: "A physics-informed deep learning framework for spacecraft pursuit-evasion task assessment", CHINESE JOURNAL OF AERONAUTICS, ELSEVIER, AMSTERDAM, NL, vol. 37, no. 5, 28 February 2024 (2024-02-28), pages 363-376, XP087531759, ISSN: 1000-9361, DOI: 10.1016/J.CJA.2024.02.011 [retrieved on 2024-02-28] * abstract * * sections 1, 2, 2.1-2.3, * | 1-14 | |
| X | SOMIL BANSAL ET AL: "DeepReach: A Deep Learning Approach to High-Dimensional Reachability", ARXIV.ORG, CORNELL UNIVERSITY LIBRARY, 201 OLIN LIBRARY CORNELL UNIVERSITY ITHACA, NY 14853, 4 November 2020 (2020-11-04), XP081807396, * abstract * * sections I, III-VI * | 1-14 | |

TECHNICAL FIELDS SEARCHED (IPC)

G06N
G05D

-----

-----

-/--

The present search report has been drawn up for all claims

| Place of search | Date of completion of the search | Examiner |
|---|---|---|
| The Hague | 9 December 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 24 27 5077

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHRISTOPHER RACKAUCKAS ET AL: "Universal Differential Equations for Scientific Machine Learning", ARXIV.ORG, CORNELL UNIVERSITY LIBRARY, 201 OLIN LIBRARY CORNELL UNIVERSITY ITHACA, NY 14853, 2 November 2021 (2021-11-02), XP091085726, * abstract * * sections 2.3, 2.4 * | 1-14 | |
| A | STIPANOVIC DUSAN M. ET AL: "GUARANTEED STRATEGIES FOR NONLINEAR MULTI-PLAYER PURSUIT-EVASION GAMES", INTERNATIONAL GAME THEORY REVIEW, vol. 12, no. 01, 1 March 2010 (2010-03-01), pages 1-17, XP093230516, ISSN: 0219-1989, DOI: 10.1142/S0219198910002489 Retrieved from the Internet: URL:https://dx.doi.org/10.1142/S0219198910 002489> * abstract * * section 4 * | 1-14 | |
| A | THAI DUONG ET AL: "Hamiltonian-based Neural ODE Networks on the SE(3) Manifold For Dynamics Learning and Control", ARXIV.ORG, CORNELL UNIVERSITY LIBRARY, 201 OLIN LIBRARY CORNELL UNIVERSITY ITHACA, NY 14853, 24 September 2021 (2021-09-24), XP091046623, * abstract * * section III * | 1-14 | |

TECHNICAL FIELDS
SEARCHED (IPC)

The present search report has been drawn up for all claims

| Place of search | Date of completion of the search | Examiner |
|---|---|---|
| The Hague | 9 December 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)